# DEMANDE DE BREVET EUROPEEN

(11) **EP 2 409 866 A1**
(43) Date de publication de la demande: **25.01.2012**
(21) Numéro de dépôt: 11174765.5
(22) Date de dépôt: 20.07.2011
(51) Int. Cl.: B60J 7/00

(54) **Dispositif d'occultation à pistons de blocage des barres de tirage**

(30) Priorité: 23.07.2010 FR 1056076
(71) Demandeur: Advanced Comfort Systems France SAS ACS France SAS, 79302 Bressuire Cedex (FR)
(72) Inventeur: Guilloteau, Sébastien, 79350 FAYE L'ABBESSE (FR); Cousson, François, 79430 LA CHAPELLE SAINT LAURENT (FR)
(74) Mandataire: Bioret, Ludovic

(57) **Abrégé**

L'invention concerne un dispositif d'occultation d'une surface vitrée d'un véhicule, comprenant au moins une première toile d'occultation montée sur un premier tube enrouleur et entraînée par une première barre de tirage (112), dans lequel au moins une desdites extrémités de ladite barre de tirage porte un doigt (33) apte à coopérer avec un logement complémentaire (43) formé dans le rail (13) guidant ladite extrémité, ledit doigt (33) pouvant prendre une position de blocage, dans laquelle il pénètre dans ledit logement (43), et une position repoussée, dans laquelle il est en contact avec une aile dudit rail, coopérant avec des moyens de rappel (41) tendant à ramener ledit doigt (33) dans la position de blocage.

## Description

### 1. Domaine de l'invention

Le domaine de l'invention est celui des dispositifs d'occultation pour véhicules automobiles, et notamment pour l'occultation d'un pavillon vitré. Plus précisément, l'invention concerne les dispositifs mettant en oeuvre des stores à enrouleur, comprenant une toile d'occultation montée sur un tube enrouleur et entraînée par une barre de tirage guidée le long de deux rails de guidage.

### 2. Art antérieur

On connaît de nombreux dispositifs d'occultation pour véhicules automobiles, mettant en oeuvre une ou plusieurs toiles d'occultation. On prévoit souvent une toile unique, mobile depuis l'arrière du véhicule vers l'avant de celui-ci. Du fait de la grande longueur de toile à déployer, et donc du long déplacement nécessaire de la barre de tirage, ces systèmes sont généralement motorisés. On a également proposé des systèmes mettant en oeuvre deux toiles, mobiles l'une vers l'autre, comme décrit par exemple dans le document EP 1 527 925.

### 3. Inconvénients de l'art antérieur

Les dispositifs à actionnement manuel pour l'occultation des pavillons vitrés sont relativement complexes à mettre en oeuvre, notamment lorsque deux toiles sont mises en oeuvre. Ils nécessitent des moyens particuliers pour immobiliser et maintenir les toiles dans la position déployée.

Une autre difficulté de ces dispositifs est que les toiles, lorsqu'elles ne sont pas maintenues, ont tendance à s'enrouler trop rapidement, sous l'action des moyens de rappel prévus à cet effet dans les tubes enrouleur. Ainsi, lorsqu'un utilisateur lâche la barre de tirage, celle-ci risque de se déplacer trop vite et, le cas échéant, de se mettre de travers, induisant des risques de blocage et/ou de détérioration.

Par ailleurs, un inconvénient des dispositifs connus est que des problèmes de fiabilité peuvent apparaître, du fait de jeux ou d'imprécisions dans le montage des rails. On constate alors des défauts de dispersion de l'entraxe des rails, pouvant entraîner des blocages.

### 4. Objectifs de l'invention

L'invention a notamment pour objectif de pallier au moins certains de ces inconvénients de l'art antérieur.

Plus précisément, un objectif de l'invention est de fournir un dispositif d'occultation simple et fiable, permettant un maintien efficace en position déployée et une manipulation aisée et ergonomique.

Un autre objectif de l'invention, selon au moins un mode de réalisation, est de fournir un tel dispositif d'occultation, fonctionnant de façon efficace malgré d'éventuelles dispersions de l'entraxe des rails.

Encore un autre objectif de l'invention, selon au moins un mode de réalisation, est de fournir un tel dispositif d'occultation, contrôlant la vitesse de repli des toiles, notamment lorsqu'une barre de tirage est lâchée par l'utilisateur.

Selon un autre aspect, et selon au moins un mode de réalisation, un objectif de l'invention est de fournir un tel dispositif d'occultation permettant de fournir des caractéristiques d'occultation distinctes.

### 5. Résumé de l'invention

Ces objectifs, ainsi que d'autres qui apparaîtront par la suite, sont atteints à l'aide d'un dispositif d'occultation d'une surface vitrée d'un véhicule, comprenant au moins une première toile d'occultation montée sur un premier tube enrouleur et entraînée par une première barre de tirage.

Selon l'invention, au moins une desdites extrémités de ladite barre de tirage porte un doigt apte à coopérer avec un logement complémentaire formé dans le rail guidant ladite extrémité, ledit doigt étant mobile selon l'axe principal de la barre de tirage pour se déplacer entre une position de blocage, dans laquelle il pénètre dans ledit logement, et une position repoussée, dans laquelle il est en contact avec une aile dudit rail, coopérant avec des moyens de rappel tendant à ramener ledit doigt dans la position de blocage.

Ainsi, ce ou ces doigts forment des pistons, qui assurent de façon simple et efficace le blocage de la barre de tirage, en coopérant avec le rail.

Ces doigts peuvent en outre assurer une fonction de freinage du déplacement de la barre de tirage, lors du repli de la toile (notamment lorsque l'utilisateur lâche la barre de tirage), du fait de la friction du doigt le long du rail.

Ils peuvent également assurer une fonction de compensation des variations et dispersion de l'entraxe des rails.

De façon avantageuse, ledit doigt, ledit logement et lesdits moyens de rappel sont configurés de façon à permettre un déblocage du doigt retenu dans le logement par passage du point dur, lorsqu'une force supérieure à un seuil prédéterminé est appliquée à la barre de tirage dans sa direction de déplacement.

Ainsi, la libération de la barre de tirage, et donc le déplacement de la toile, peut se faire par simple action sur la barre de tirage, sans nécessiter de moyens particuliers d'actionnement ou de déverrouillage.

Le dimensionnement peut également être adapté pour qu'un déplacement rapide de la barre de tirage au niveau du logement n'entraîne pas de solidarisation du doigt et du logement (le mouvement rapide signifiant que l'utilisateur souhaite déplacer la barre de tirage au-delà de la position intermédiaire du logement).

Pour des raisons d'efficacité et d'équilibrage notamment, il est intéressant que ladite barre de tirage porte un doigt mobile à chacune de ses deux extrémités.

Selon un mode de réalisation particulier, le dispositif d'occultation de l'invention comprend une seconde toile d'occultation montée sur un second tube enrouleur et entraînée par une seconde barre de tirage, les extrémités desdites barres de tirage étant guidées dans des rails de guidage, lesdits premier et second tubes enrouleurs étant disposés respectivement de part et d'autre de la surface vitrée et lesdites première et seconde toiles d'occultation se déployant dans des sens opposés.

Dans ce cas, la position intermédiaire pour les logements associés à chaque barre de tirage peut correspondre à une position sensiblement centrale (sensiblement à la même distance de chacun desdits tubes enrouleurs), dans laquelle les deux barres de tirage sont en contact l'une avec l'autre.

Dans ce mode de réalisation, avantageusement, chacune desdites barres de tirage porte au moins un doigt mobile.

Préférentiellement, ladite première barre de tirage porte au moins un premier doigt mobile apte à coopérer avec un premier logement et ladite seconde barre de tirage porte au moins un second doigt mobile apte à coopérer avec un second logement, lesdits doigts et/ou lesdits logements étant configurés de façon que ledit premier doigt ne puisse pas coopérer avec ledit second logement, et que ledit second doigt ne puisse pas coopérer avec ledit premier logement.

Ainsi, chaque barre de tirage n'est arrêtée qu'une fois (ne dispose que d'une position intermédiaire stable) sur toute la longueur des rails).

Selon une première approche, ledit premier doigt peut ainsi présenter une section incompatible avec ledit second logement, et en ce que ledit second doigt présente une section incompatible avec ledit premier logement.

Par exemple, pour chaque rail, l'un desdits doigts peut présenter une section cylindrique et l'autre desdits doigts présente une section oblongue.

Selon une deuxième approche, lesdits rails définissent deux zones d'appui distinctes, respectivement pour le premier et le second doigts, et lesdits premier et second logements sont distribués sur l'une et l'autre desdites zones d'appui respectivement.

Dans un mode de réalisation particulier, lesdites toiles d'occultation présentent des caractéristiques d'occultation différentes.

Par exemple, une desdites toiles est une toile ajourée, et l'autre desdites toiles est une toile opaque.

Dans ce cas, on peut prévoir que l'utilisateur puisse sélectionner l'une ou l'autre des toiles, en fonction des besoins. Au moins une desdites toiles (et de préférence les deux toiles) peut donc présenter une longueur suffisante pour occulter l'intégralité de ladite surface vitrée.

Avantageusement, lesdites première et seconde barres de tirage comprennent des moyens de solidarisation l'une à l'autre.

Elles peuvent alors être déplacées de façon liée ou indépendamment l'une de l'autre, selon les besoins.

Selon un aspect particulier de l'invention, lesdits logements sont placés sensiblement à la même distance desdits tubes enrouleurs.

### 6. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 illustre schématiquement un dispositif d'occultation selon l'invention ;
- les figures 2A à 2D présentent quatre positions possibles pour les toiles du dispositif d'occultation de la figure 1 ;
- la figure 3 montre l'extrémité de l'une des barres de tirage, munie d'un doigt, ou piston, selon l'invention ;
- les figures 4A et 4B présentent les deux positions que peut prendre le doigt de la figure 3 ;
- la figure 5 illustre un premier mode de réalisation selon lequel les logements et les doigts présentent des sections différentes ;
- la figure 6 illustre un deuxième mode de réalisation selon lequel les logements sont placés à des niveaux différents.

### 7. Description d'un mode de réalisation de l'invention

L'invention propose donc un dispositif d'occultation d'une surface vitrée d'un véhicule automobile, et notamment d'un pavillon vitré. Selon l'invention, le dispositif d'occultation comprend au moins un store à enrouleur, présentant une toile d'occultation dont le déplacement est contrôlé par une barre de tirage, dont les deux extrémités sont guidées dans des rails de guidage.

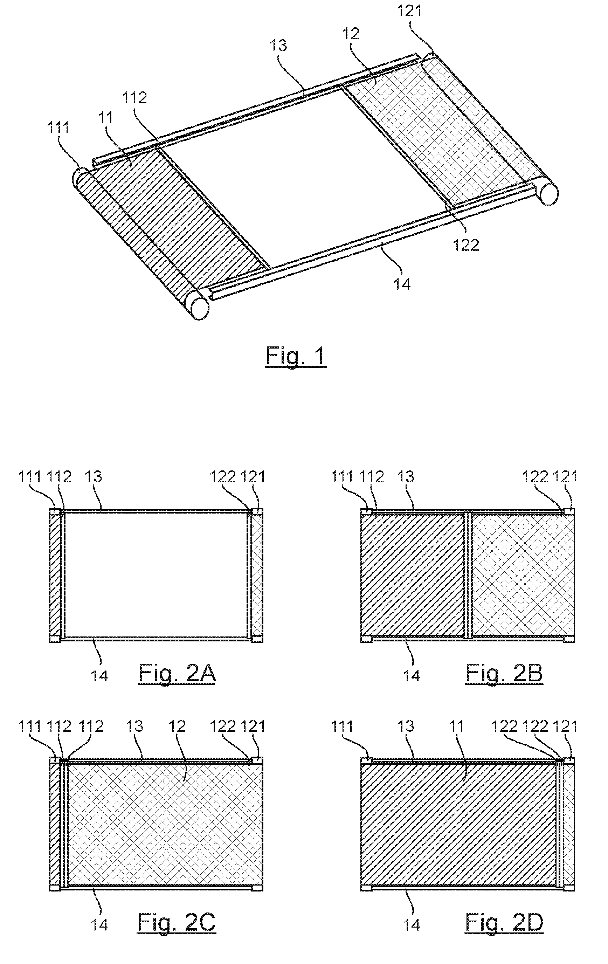

Selon un mode de réalisation particulier, illustré notamment par la figure 1, le dispositif d'occultation met en oeuvre deux stores enrouleur, dont les toiles peuvent être déployées l'une vers l'autre, de façon à occulter l'intégralité de la surface vitrée, les deux barres de tirage étant alors solidarisées l'une à l'autre, ou à tout le moins en contact l'une avec l'autre.

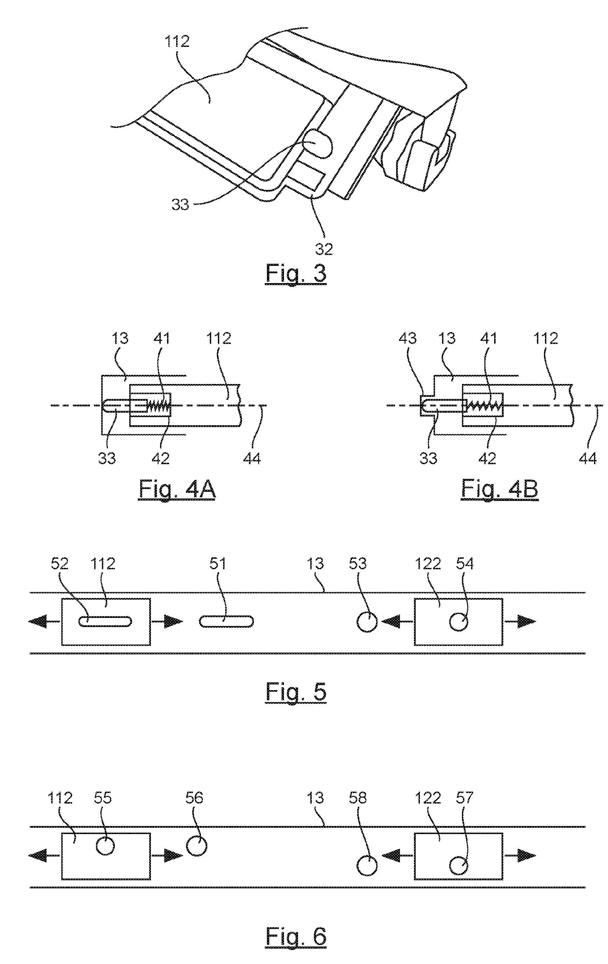

Cependant, l'invention peut également être mise en oeuvre dans un dispositif d'occultation à toile unique, comprenant une unique barre de tirage. Dans ce cas, il peut s'agir d'une barre de tirage telle qu'illustré par la figure 3 et les figures 4A et 4B.

Dans un mode de réalisation à deux toiles d'occultation, comme on le voit sur la figure 1, un premier store enrouleur comprend une toile 11, montée sur un tube enrouleur 111, muni classiquement de moyens de rappel (non représentés) tendant à ramener la toile 11 dans sa position repliée. L'extrémité libre de la toile 11 porte une barre de guidage 112, dont les deux extrémités sont guidées dans des rails latéraux 13 et 14, par exemple solidaires du pavillon vitré.

Un second store à enrouleur, comprenant une toile d'occultation 12, est monté sur un deuxième tube enrouleur 121, placé à l'opposé du tube enrouleur 111. Ainsi, le tube enrouleur 111 peut être placé du côté arrière du véhicule, et le tube enrouleur 121 du côté avant du véhicule.

La deuxième toile d'occultation 12 est solidaire d'une barre de tirage 122, également guidée par les rails 13 et 14.

Les deux toiles d'occultation 11 et 12 peuvent être réalisées dans la même matière. Selon un mode de réalisation particulier, les deux toiles peuvent également être différentes. Dans ce cas, par exemple, la toile d'occultation 11 peut être opaque, c'est-à-dire totalement, ou à tout le moins fortement occultante. Elle ne laisse passer aucun, ou peu de rayons de soleil. La seconde toile d'occultation 12 peut en revanche être une toile ajourée, apte à laisser passer une partie de la lumière.

Ainsi, les utilisateurs peuvent adapter l'occultation en fonction de leurs besoins, tels qu'illustrés par les figures 2A à 2D.

Dans la situation de la figure 2A, aucune occultation n'est mise en oeuvre, et les deux toiles d'occultation 11 et 12 sont repliées. Dans ce cas, la barre de tirage est en contact, ou à proximité, du tube enrouleur 111. De la même façon, la barre de tirage 122 est rapprochée du tube enrouleur 121.

Dans la position de la figure 2B, les deux barres de tirage 112 et 122 sont rapprochées l'une de l'autre, et de préférence solidarisées l'une à l'autre, sensiblement en position centrale, c'est-à-dire sensiblement à égale distance des deux tubes enrouleur 111 et 121. Dans ce cas, la partie arrière du véhicule est occultée de façon forte, par la toile 11, et la partie avant du véhicule est occultée de façon atténuée, à l'aide de la toile ajourée 12.

La longueur de la seconde toile 12 enroulée sur le tube enrouleur 121 est suffisante pour que celle-ci soit déployée intégralement, ou quasi intégralement, sur la surface totale devant être occultée, comme illustré par la figure 2C. dans ce cas, les deux barres de tirage 112 et 122, qui peuvent restées solidarisées l'une à l'autre, sont ramenées à proximité du tube enrouleur 111. Dans ce cas, l'intégralité de la surface vitrée est occultée de façon atténuée, à l'aide de la toile ajourée 12.

De façon symétrique, la toile 11, assurant une occultation forte, voire totale, est intégralement déployée en regard de la surface à occulter, les deux barres de tirage 112 et 122 étant ramenées à proximité du tube enrouleur 121.

On comprend que dans les deux positions extrêmes des figures 2C et 2D, les barres de tirage se trouvent en butée, et qu'il n'y a donc pas besoin de moyens spécifiques pour les immobiliser.

En revanche, dans la position de la figure 2B, les deux barres de tirage 112 et 122 se trouvent en position centrale, et il est souhaitable qu'elles soient immobilisées, de façon qu'elles ne se déplacent pas, en fonction des vibrations, des accélérations ou des freinages du véhicule.

Pour cela, comme illustré par la figure 3, on prévoit d'équiper au moins une extrémité de la barre de tirage, et préférentiellement les deux extrémités, d'un doigt mobile 33, formant piston, mobile selon, ou parallèlement à, l'axe principal 44 (figures 4A et 4B) de la barre de tirage 112, assurant une fonction de blocage dans la position centrale (figure 2B), en coopération avec un logement prévu à cet effet dans le rail de guidage.

Comme indiqué plus haut, cette approche peut être mise en oeuvre dans le mode de réalisation de la figure 1, mais également dans un dispositif d'occultation à toile unique. Dans le cas d'un dispositif à deux toiles d'occultation, la barre de tirage 112, et de préférence également l'autre barre de tirage 122, sont équipées de tels doigts.

L'extrémité de la barre de tirage 112 comprend donc notamment un patin de guidage 32, coulissant dans une zone de guidage prévue à cet effet dans le rail 13, et le doigt 33, formant piston.

Préférentiellement, deux doigts sont prévus, à chaque extrémité de la barre de tirage, de façon symétrique.

La mise en oeuvre du doigt 33 est illustrée de façon schématique par les figures 4A et 4B. Le doigt 33 est monté dans un réceptacle 42 de la barre de tirage 112, qui contient un ressort de rappel, tendant à pousser le doigt 33 vers l'extérieur, c'est-à-dire vers le fond du rail 13.

Sensiblement au centre du rail 13, et plus précisément à l'emplacement où l'on souhaite que la barre de tirage 112 soit immobilisée, un logement 43 est ménagé dans le fond du rail 13, apte à recevoir le doigt 33. Ainsi, lorsque le doigt 33 passe au niveau du logement 43, il pénètre à l'intérieur de celui-ci, sous l'action du ressort 41. La barre de tirage 112 est alors immobilisée.

Le doigt 33, le logement 43 et le ressort 41 sont dimensionnés de façon à assurer le blocage de la barre de tirage, mais également de façon à permettre une désolidarisation du doigt 33 et du logement 43 sous l'effet d'une traction suffisante (c'est-à-dire supérieure à un seuil prédéterminé) de façon à permettre un décrochage par passage d'un point dur. En d'autres termes, il n'est pas nécessaire de prévoir des moyens d'actionnement du déverrouillage, celui-ci étant obtenu directement en agissant sur la barre de tirage.

Le dimensionnement est également adapté, de préférence, de façon qu'un déplacement rapide d'une barre de tirage ou des deux barres de tirage solidarisées, par exemple pour passer de la position de la figure 2C à la position de la figure 2D, n'entraîne pas une solidarisation non souhaitée, dans la position intermédiaire dans la figure 2B.

Par ailleurs, on notera, comme cela apparaît sur la figure 4A, le pion 33 est toujours en contact avec le fond du rail 13, sous l'action de ressort 41. Ce frottement assure une fonction de freinage, s'opposant à un repli trop rapide de la toile, sous l'action des moyens de rappel du tube enrouleur. Ceci est notamment utile, au moment où l'utilisateur lâche la barre de tirage, après l'avoir décrochée.

Enfin, on comprend que l'effet de piston assuré par le doigt 33 et le ressort 41, assure, de façon simple et efficace, une compensation des jeux et/ou des variations d'entraxe entre les deux rails 13 et 14.

Il est possible, le cas échéant, de prévoir plusieurs logements 43, s'il est utile de disposer de positions intermédiaires de blocage pour la barre de tirage correspondante. Ceci peut notamment être mise en oeuvre dans le cas d'un dispositif à une seule toile d'occultation.

En revanche, on comprend qu'il n'est pas souhaitable que deux logements 43 soient placés à proximité l'un de l'autre, un premier pour la première barre de tirage 112 et un second pour la seconde barre de tirage 122. En effet, dans ce cas, le pion 33 serait libéré du premier logement 43, pour retomber immédiatement dans le logement voisin qui était destiné à l'autre barre de tirage.

Pour éviter ce problème, on prévoit avantageusement, comme illustré par la figure 5, des formes de pion 52 et 54 et en conséquence les formes de logement 51 et 53, différentes et non compatibles. Ainsi, par exemple, la barre de tirage 112 porte un doigt 52 de forme oblongue, apte à coopérer avec un logement oblong 51. La barre de tirage 122 porte, quant à elle, un doigt de section cylindrique 54 coopérant avec un logement cylindrique 53.

Il apparaît clairement que le doigt 52 ne peut pas pénétrer dans le logement 53 (le diamètre du doigt étant supérieur à la hauteur du logement), et que de la même façon, le doigt 54 ne peut pas pénétrer dans le logement 51 (la longueur du doigt étant supérieure au diamètre du logement). On dispose donc ainsi de deux moyens de blocage distincts, respectivement pour chacune des barres de tirage, sans que les moyens de blocage de l'une des barres de tirage n'interfèrent avec les moyens de blocage de l'autre des barres de tirage.

D'autres formes et sections pour les doigts et les logements peuvent bien sûr être utilisés.

En variante, il est possible d'utiliser des pions similaires 55 et 57, comme illustré par la figure 6. Dans ce cas, les logements 56 et 57 formés dans les rails 13 sont préférentiellement disposés sur des ailes différentes de ce rail, ou sur des zones différentes. Par exemple, dans le cas de la figure 6, le logement 56 est décalé en hauteur, par rapport au logement 58. On comprend donc que le doigt 55 peut coopérer avec le logement 56, mais non avec le logement 58, et qu'inversement, le doigt 57 peut coopérer uniquement avec le logement 58.

Il est également envisageable, dans certains modes de réalisation, et notamment si des moyens d'équilibrage sont prévus, de prévoir un seul doigt pour chaque barre de tirage, une des barres de tirage coopérant avec un logement formé dans le rail 13, et la seconde barre de tirage coopérant avec un logement formé dans le rail 14.

Selon un mode de réalisation particulier, les deux barres de tirage 112 et 122 (ou au moins l'une d'entre elles) sont équipées de moyens permettant de les solidariser l'une à l'autre, par exemple sous la forme d'un prolongement, ou casquette, d'une des barres de tirage, venant et s'accrocher à l'autre barre de tirage. Il est ainsi aisé de déplacer simultanément les deux barres de tirage, en agissant sur une seule d'entre elles, pour passer de l'une quelconque des positions des figures 2B, 2C ou 2D.

Ce mécanisme permet également une désolidarisation aisée des deux barres de tirage, par exemple en levant légèrement la barre de tirage équipée de la casquette, afin de replier l'une des barres de tirage. Il est effet possible, dans d'autres positions que celles illustrées dans les figures 2A à 2D, qu'une seule des deux toiles 11 ou 12 soit déployée jusque la position intermédiaire. Dans ce cas, la barre de tirage correspondante est maintenue à l'aide des doigts de blocage et des logements correspondants.

## Revendications

1. Dispositif d'occultation d'une surface vitrée d'un véhicule, comprenant au moins une première toile d'occultation (11) montée sur un premier tube enrouleur (111) et entraînée par une première barre de tirage (112),
**caractérisé en ce qu'**au moins une desdites extrémités de ladite barre de tirage porte un doigt (33) apte à coopérer avec un logement complémentaire (43) formé dans le rail (13, 14) guidant ladite extrémité,
ledit doigt (33) étant mobile selon l'axe principal de la barre de tirage et pouvant prendre une position de blocage, dans laquelle il pénètre dans ledit logement (43), et une position repoussée, dans laquelle il est en contact avec une aile dudit rail (13, 14), coopérant avec des moyens de rappel (41) tendant à ramener ledit doigt (33) dans la position de blocage.

2. Dispositif d'occultation selon la revendication 1, **caractérisé en ce que** ledit doigt (33), ledit logement (43) et lesdits moyens de rappel (41) sont configurés de façon à permettre un déblocage du doigt (33) retenu dans le logement par passage du point dur, lorsqu'une force supérieure à un seuil prédéterminé est appliquée à la barre de tirage (112) dans sa direction de déplacement.

3. Dispositif d'occultation selon l'une quelconque des revendications 1 et 2, **caractérisé en ce que** ladite barre de tirage (112) porte un doigt (33) à chacune de ses deux extrémités.

4. Dispositif d'occultation selon l'une quelconque des revendications 1 à 3, **caractérisé en ce qu'**il comprend une seconde toile d'occultation (12) montée sur un second tube enrouleur (121) et entraînée par une seconde barre de tirage (122), les extrémités desdites barres de tirage (112, 122) étant guidées dans des rails de guidage (13, 14),
lesdits premier et second tubes enrouleurs (111, 121) étant disposés respectivement de part et d'autre de la surface vitrée et lesdites première et seconde toiles d'occultation (11, 12) se déployant dans des sens opposés.

5. Dispositif d'occultation selon la revendication 4, **caractérisé en ce que** chacune desdites barres de tirage (112, 122) porte au moins un doigt mobile (33 ; 52, 54 ; 55, 57).

6. Dispositif d'occultation selon la revendication 5, **caractérisé en ce que** ladite première barre de tirage (112) porte au moins un premier doigt (52 ; 55) apte à coopérer avec un premier logement (51 ; 56) et ladite seconde barre de tirage (122) porte au moins un second doigt (54 ; 57) apte à coopérer avec un second logement (53 ; 58), lesdits doigts et/ou lesdits logements étant configurés de façon que ledit premier doigt ne puisse pas coopérer avec ledit second logement, et que ledit second doigt ne puisse pas coopérer avec ledit premier logement.

7. Dispositif d'occultation selon la revendication 6, **caractérisé en ce que** ledit premier doigt (52) présente une section incompatible avec ledit second logement (53), et **en ce que** ledit second doigt (54) présente une section incompatible avec ledit premier logement (51).

8. Dispositif d'occultation selon la revendication 7, **caractérisé en ce que** l'un desdits doigts (54) présente une section cylindrique.

9. Dispositif d'occultation selon l'une quelconque des revendications 7 et 8, **caractérisé en ce que** l'un desdits doigts (52) présente une section oblongue.

10. Dispositif d'occultation selon la revendication 6, **caractérisé en ce que** lesdits rails (13, 14) définissent deux zones d'appui distinctes, respectivement pour le premier et le second doigts (55, 57), et **en ce que** lesdits premier et second logements (56, 58) sont distribués sur l'une et l'autre desdites zones d'appui respectivement.

11. Dispositif d'occultation selon l'une quelconque des revendications 4 à 10, **caractérisé en ce que** lesdites toiles d'occultation (11, 12) présentent des caractéristiques d'occultation différentes.

12. Dispositif d'occultation selon la revendication 11, **caractérisé en ce qu'**une desdites toiles est une toile ajourée (12), et l'autre desdites toiles est une toile opaque (11).

13. Dispositif d'occultation selon l'une quelconque des revendications 1 à 12, **caractérisé en ce qu'**au moins une desdites toiles (11, 12) présente une longueur suffisante pour occulter l'intégralité de ladite surface vitrée.

14. Dispositif d'occultation selon l'une quelconque des revendications 4 à 13, **caractérisé en ce que** lesdites première et seconde barres de tirage (112, 122) comprennent des moyens de solidarisation l'une à l'autre.

15. Dispositif d'occultation selon l'une quelconque des revendications 4 à 14, **caractérisé en ce que** lesdits logements sont placés sensiblement à la même distance desdits tubes enrouleurs (111, 121).
